Europäisches Patentamt

European Patent Office

Office européen des brevets

(11) Publication number: **0 311 443**
**A2**

# (12) EUROPEAN PATENT APPLICATION

(21) Application number: **88309407.0**

(22) Date of filing: **07.10.88**

(51) Int. Cl.⁴: **G 01 M 3/32**

(30) Priority: **09.10.87 CS 7319/87**

(43) Date of publication of application:
**12.04.89 Bulletin 89/15**

(84) Designated Contracting States:
**AT CH DE ES FR GB GR IT LI**

(71) Applicant: **JEDNOTNE ROLNICKE DRUZSTVO JEDLOVA,
VO VYSNEJ JEDLOVEJ
089 01 Jedlova Svidnik (CS)**

(72) Inventor: **Houzvic, Vladimir,
No. 48 Jihlavska,
Praha 4, (CS)**

**Jakl, Jiri,
No. 6 Novatoru,
Praha 4, (CS)**

(74) Representative: **Ablewhite, Alan James et al
MARKS & CLERK 57/60 Lincoln's Inn Fields
London WC2A 3LS (GB)**

(54) Method for checking the pressure in closed bottles containing a liquid and arrangement for execution of said method.

㉗ Method and arrangemnt for checking the pressure in closed bottles with liquid containing carbon dioxide by introduction prior to stoppering the bottle into the bottle at least one compressible float indicating the achievement of the required pressure within the bottle by a change of the position of the float therein.

EP 0 311 443 A2

Bundesdruckerei Berlin

# Description

## Method for checking the pressure in closed bottles containing a liquid and arrangement for execution of said method

The invention relates to a method for checking the pressure within closed bottles containing a liquid with a content of carbon dioxide, particularly of sparkling wine, said method basing on the checking of the pressure created within the bottle after its closing and it also relates to an arrangement for execution of this method.

One of main requirements for achievement of a good quality in manufacture of sparkling wine is that the pressure within the bottle has to rise ofter its final stoppering to a required value, for instance of 0,5 MPa. No reliable method for determination of the pressure in closed bottles is at present known. The checking of the pressure is mow accomplished by opening a certain number of bottles at random or every n-th bottle. The wine in the bottle is thereby depreciated whereby this method does not exclude the possibility of an error and therefore does not secure the quality of the remaining bottled wine.

The substantial feature of this invention is that prior to the final stoppering of a bottle at least one compressible float is placed therein and its drop or its position is checked.

The arrangement for execution of this methor for checking the pressure within closed bottles with a liquid comprises a compressible float designed so that the overall density of the float at atmospheric pressure is equal or lower than the density of the liquid in the bottle and at the required pressure the density of the float is equal or higher than the density of the liquid in the bottle, whereby the overall coefficient "k" according to the equation

$$k = \frac{1 - \dfrac{\gamma_o}{\gamma_1}}{p_1 - p_o}$$

is determined by the magnitude of the overall densities $\gamma_o$ and $\gamma_l$ and the required pressure $p_l$, whereby $\gamma_o$ is the mean value of density of the compressible float at atmospheric pressure $p_o$ and $\gamma_l$ is the mean value of the density of the compressible float at the required, i.e. checked pressure $p_l$.

The determination of pressure within the bottle is performed visually or by an automatic checking of the position of the compressible float introduced into the bottle, the volume of which float being variable in dependence on the pressure prevailing in the bottle. The compressible float is a device composed of a proper body, an easily deformable housing and possibly also of a ballast, whereby the sum of weights of all materials from which the individual parts of the float are made, divided by the sum of volumes of materials from which the individual parts are made, is larger than the density of the liquid in the bottle, whereby an easily compressible medium, for instance air is enclosed in said housing, the volume of which is at atmospheric pressure so that the ratio of sums of weights of materials from which the individual parts are made and of the sum of volumes of materials from which the individual parts are made together with the volume of the housing is a value which is equal or lower than the value of the density of the liquid in the bottle. A condition has to be fulfilled simultaneously, namely that the ratio of the sum of weights of materials from which the individual parts are made to the sum of volumes of materials from which the individual parts are made including the volume of the housing with the compressible medium, for instance air at the required pressure in the bottle is equal or larger than the density of the liquid in the bottle. No changes in operation are observed in case individual parts are made of a material, for instance rubber of plastics and the easily compressible material, for instance air, is dissipated in the shape of many bubbles, so far conditions for the required compressibility of the float are maintained and are simultaneously maintained the required densities of the float as a unit at atmospheric and at the required pressure within the bottle. The required coefficient "k" of the float can be expressed by the relation

$$k = \frac{1 - \dfrac{\gamma_o}{\gamma_1}}{p_1 - p_o}$$

where $\gamma_o$ is the overall density of the compressible float at atmospheric pressure $p_o$, which density has to be equal or smaller than the density of the liquid in the bottle, whereas $\gamma_l$ is the overall density of the compressible float at required pressure $p_l$ which has to be equal or larger than the density of $\gamma_k$ of the liquid in the bottle. The method for checking the achievement of the required pressure in the bottle is based on the observation of the position or drop of the compressible float, submerged in the liquid in the bottle prior to its stoppering.

A major contribution of the object of this invention consists in that it enables a checking of the quality of a beverage, for instance of sparkling wine without opening the bottle, a further advantage is the simplicity of the visual control and also the possibility of automation of the checking on a manufacturing line. The application of a gas, for instance of air as compressible medium has the advantage that this method is practically independent on changes of temperature. A mutual compensation compensation of the influence of temperature of the air in the float and of the carbon dioxide in the bottle is achieved as the difference of the physical values of gas constants of both gases are in the given case negligible.

As a concrete utilization of the object of this invention an examplary embodiment is mentioned where a requirement is asked for that the value of an absolute pressure higher than 0,7 MPa is achieved in bottles with sparkling wine, the density of which is $\gamma_k = 1,01$ g/cm$^3$.

The float inserted into the bottle prior to final stoppering of the bottle is made of some hygienically unobjectionable plastic, for instance of polyethylene with a filler so that the resulting density of the used material is 1,015 g/cm$^3$. The float is made of the shape of a little human figure, above which a small balloon of the shape of a lentil on a thin polyethylene thread is floating. The volume of the used material is 1,5 cm$^3$, the volume of the housing of the balloon filled with air at atmospheric pressure of 0,1 MPa is 0,052 cm$^3$. The overall density of the floater $\gamma_0$ at atmospheric pressure is about 0,981 g/cm$^3$ so that the body floats on the surface. In case due to release of carbon dioxide the pressure in the bottle increases to $p_l = 0,7$ MPa, then due to this pressure the volume of air in the balloon is reduced to about 0,0074 g/cm$^3$ Thus the overall density $\gamma_l$ of the float is increased to $\gamma_l = 1,01$ g/cm$^3$. At a pressure slightly higher the float starts to drop to the bottom, whereby this drop is assisted by the increasing hydrostatic pressure. The coefficient of compressibility has in the given case the value of
$k = 1,803.10^{-2}$ [1/MPa]
The reciprocal value is the bulk modulus of elasticity $E_v = 55,46$ [MPa]. The theoretical calculation of volumes and densities serves as a base for a proposal of a prototype of the body. A substantial margin of accuracy of manufacture is given by selection of the initial density $\gamma_0$. The proper checking of achievement of the required pressure is accomplished visually, bottles where the float did not drop to the bottom are discarded.

The application of compressible floats as a prove of the quality according to this invention can bring substantial commercial, protectional and advertizing advantages. Floats shaped artistically at possible application of colours and reflection effects are for this purpose very suitable, whereby the shapes can be rather different. By a suitable selection of the location of the gravitation center and of the housing with compressed medium air a change of the position can be achieved, for instance a turning over upside down.

More floats with a different coefficient of compressibility can be also inserted into a bottle. The floats can be solved differently whether it is required that they have to remain in the bottle or whether they have to be provided with some means enabling their pulling out of the bottle, for instance with some weight suspended on a thread. Metal inserts in the float enable to utilize other physical principles in case of automatic checking on manufacturing lines in case very dark glass is used for the bottles.

## Claims

1. Method for checking the pressure in closed bottles with liquid containing carbon dioxide, particularly of sparkling wine basing on checking of the pressure achieved within the bottle, said method consisting in introduction of at least one compressible float into the bottle prior to its closing and inspection of the position of the float and its drop.

2. Arrangement for execution of the method as in claim 1 comprising a compressible float, the overall density of which float at atmospheric pressure being equal or lower than the density of the liquid within the bottle and at the required pressure equal or larger than the density of the liquid in the bottle, whereby its overall coefficient of compressibility "k" according to the relation

$$k = \frac{1 - \dfrac{\gamma_o}{\gamma_1}}{p_1 - p_o}$$

is determined by the magnitude of the overall densities $\gamma_o$ and $\gamma_l$ and of the required pressure $p_l$, where $\gamma_o$ is the mean density of the compressible float at atmospheric pressure $p_o$ and $\gamma_l$ the mean value of the density of the compressible float at the required pressure $p_l$ which has to be checked.

3. Arrangement as in claim 2 characterised in that the float is made of a material hygienically unobjectionable, for instance of polyethylene with a possible load or a filler.